# EUROPEAN PATENT APPLICATION

(11) **EP 2 521 020 A1**
(43) Date of publication of application: **07.11.2012**
(21) Application number: 11170325.2
(22) Date of filing: 17.06.2011
(51) Int. Cl.: G06F 3/048

(54) **Systems and methods for interface management**

(30) Priority: 06.05.2011 US 102722
(71) Applicant: HTC Corporation, Taoyuan County 330 (TW)
(72) Inventor: Bamford, Drew, WA, WA Washington 98005 (US); Brinda, David, WA, WA Washington 98005 (US); Cole, Paul Kristopher, WA, WA Washington 98005 (US); Huang, Sheng-Hsin, 330 Taoyuan City, Taoyuan County (TW); Rong, Jye, 330 Taoyuan City, Taoyuan County (TW); Chen, Hsu-Jung, 330 Taoyuan City, Taoyuan County (TW)
(74) Representative: 2K Patentanwälte Blasberg Kewitz & Reichel

(57) **Abstract**

Methods and systems for interface management are provided. First, a plurality of interfaces arranged in sequence is provided. The interfaces are placed in a circle across a 3D space to form a 3D object, and the interfaces include pages or menus. Then, a signal is received, and in response to the signal, the position of the 3D object viewed on a screen of the electronic device is adjusted, wherein the 3D object is located at a virtual distance behind and away from the screen, and the virtual distance are gradually varied.

## Description

### BACKGROUND OF THE INVENTION

### Field of the Invention

The disclosure relates generally to interface browsing, and, more particularly to methods and systems for interface management that display interfaces of an electronic device with 3D (three-dimensional) visual effects.

### Description of the Related Art

Recently, portable devices, such as handheld devices, have become more and more technically advanced and multifunctional. For example, a handheld device may have telecommunications capabilities, e-mail message capabilities, an advanced address book management system, a media playback system, and various other functions. Due to increased convenience and functions of the devices, these devices have become necessities of life.

Generally, a handheld device can install a being large amount of functions which are implemented as widgets, applications, virtual or physical buttons, or any other kind of executable program code. Due to the size limitation of screens or other classification requirements, several interfaces, such as menus or pages can be provided in the handheld device. Users can perform a switch operation to switch between the interfaces by using a virtual or physical key, or a touch-sensitive screen.

Conventionally, the arrangement and display of the interfaces are uninteresting. For example, the interfaces are respectively rendered as 2D images, and one of the images representing the interfaces is displayed on the screen. When the switch operation is performed, another image is displayed on the screen to replace the original image. To enhance the value of devices and increase user experience, it is an objective of the present application to provide functional and applicable interface management systems for electronic devices.

### BRIEF SUMMARY OF THE INVENTION

Methods and systems for interface management are provided.

In an embodiment of a method for interface management, a plurality of interfaces arranged in sequence is provided. The interfaces are placed in a circle across a 3D space to form a 3D object, and the interfaces comprise pages or menus. Then, a signal is received, and in response to the signal, the position of the 3D object viewed on a screen of the electronic device are adjusted, wherein the 3D object is located at a virtual distance behind and away from the screen, and the virtual distance are gradually varied.

An embodiment of a system for interface management includes a storage unit, a screen, and a processing unit. The storage unit includes a plurality of interfaces arranged in sequence, wherein the interfaces are placed in a circle across a 3D space to form a 3D object, and the interfaces comprise pages or menus. The processing unit receives a signal, and in response to the signal, adjusts the position of the 3D object viewed on the screen, wherein the 3D object is located at a virtual distance behind and away from the screen, and the virtual distance are gradually varied.

In some embodiments, the 3D object has a predefined axle, and the 3D object is further spun with respect to the predefined axle.

In some embodiments, the 3D object is spun with respect to the predefined axle for a specific period. After the specific period, the spinning of the virtual 3D polyhedron is stopped. In some embodiments, a first interface is displayed on the screen before the spinning of the 3D object. A second interface is located among the plurality of interfaces based on the signal, and after the spinning of the 3D object, the second interface is displayed via the screen.

In some embodiments, a spinning velocity of the spinning of the 3D object is varied, and the spinning velocity of the spinning of the 3D object is from a first velocity, determined, based on the signal to 0.

In some embodiments, the virtual distance is a first value. During the spinning of the 3D object, the virtual distance varies gradually from the first value to a second value, determined, based on the signal, before finally returning back to the virtual distance of the first value.

In some embodiments, the signal comprises a movement on the screen, and the 3D object is spun in more circles when the velocity of the movement is high, and the 3D object is spun in less circles when the velocity of the movement is slow.

In some embodiments, a browsing mode of the electronic device is detected, and the virtual distance is adjusted. In some embodiments, when the browsing mode is a portrait mode, the virtual distance is set to a first value, and when the browsing mode is a landscape mode, the virtual distance is set to a second value, in which the second value is greater than the first value.

In some embodiments, the signal includes a gesture of an object on the screen, and the gesture comprises a distance, a velocity, or a contact time corresponding to the object on the screen.

Methods for interface management may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a system for interface management of the invention;

Fig. 2 is a schematic diagram illustrating an embodiment of an example of an interface of the invention;

Fig. 3 is a schematic diagram illustrating an embodiment of an example of an interface circle of the invention;

Fig. 4 is a schematic diagram illustrating an embodiment of an example of a virtual 3D polyhedron of the invention;

Fig. 5 is a schematic diagram illustrating a concept of a virtual distance between a predefined axle and a screen;

Fig. 6A is a schematic diagram illustrating an embodiment of an example of a screen view for a portrait mode of the invention;

Fig. 6B is a schematic diagram illustrating an embodiment of an example of a screen view for a landscape mode of the invention;

Fig. 7 is a flowchart of an embodiment of a method for interface management of the invention;

Fig. 8 is a flowchart of an embodiment of a method for determining a virtual distance and a background of the invention;

Figs. 9A to 9D are schematic diagrams illustrating an embodiment of an example of spinning of the virtual 3D polyhedron of the invention; and

Fig. 10 is a flowchart of another embodiment of a method for interface management of the invention.

### DETAILED DESCRIPTION OF THE INVENTION

Methods and systems for interface management are provided.

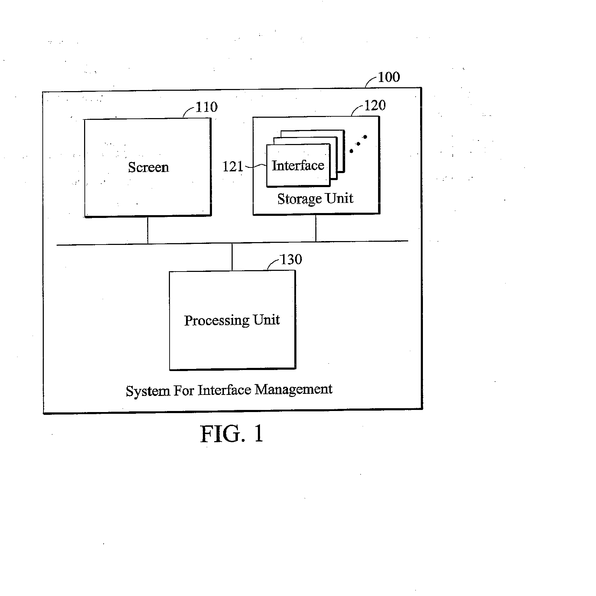

Fig. 1 is a schematic diagram illustrating an embodiment of a system for interface management of the invention. The system for interface management can be used in an electronic device, such as a PDA (Personal Digital Assistant), a smart phone, a mobile phone, an MID (Mobile Internet Device, MID), a laptop computer, a car computer, a digital camera, a multi-media player, a game device, or any other type of mobile computational device, however, it is to be understood that the invention is not limited thereto.

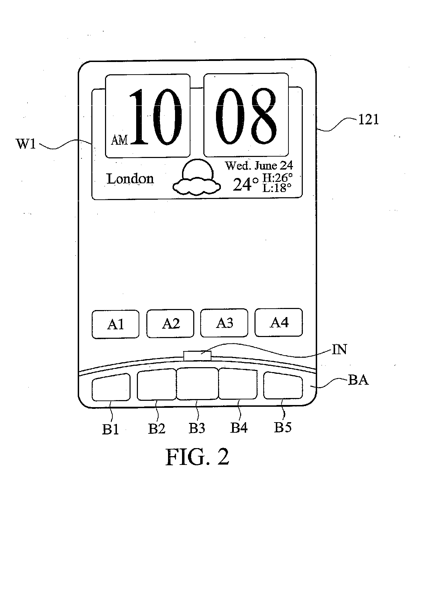

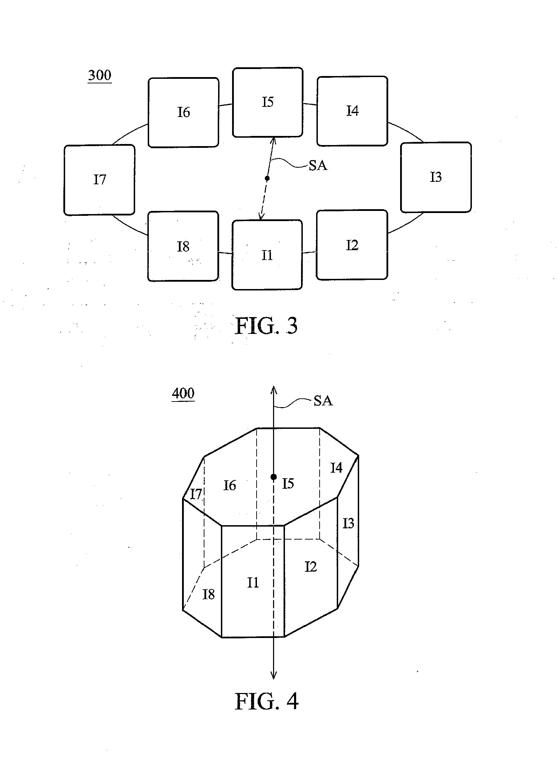

The system for interface management 100 comprises a screen 110, a storage unit 120, and a processing unit 130. The screen 110 can display related data, such as texts, figures, interfaces, and/or related information. It is understood that, in some embodiments, the screen 110 may be integrated with a touch-sensitive device (not shown). The touch-sensitive device has a touch-sensitive surface comprising sensors in at least one dimension to detect contact and movement of at least one object (input tool), such as a pen/stylus or finger near or on the touch-sensitive surface. Accordingly, users would be able to input related commands or signals via the screen. The storage unit 120 comprises a plurality of interfaces 121. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interface can comprise at least one widget, at least one application icon, and/or at least one button. Fig. 2 is a schematic diagram illustrating an embodiment of an example of an interface of the invention. As shown in Fig. 2, the interface 121 shows a widget W1, four application shortcuts A1∼A4, and five button B1∼B5, wherein the widget W1 can obtain related data, and perform related operations to show related results on the interface 121, and related applications or functions can be activated when the application shortcuts or the buttons are selected. It is understood that, in some embodiments, the plurality of interfaces 121 may be arranged to form a 3D object, such as an interface circle 300, as shown in Fig. 3, or a virtual 3D polyhedron 400, as shown in Fig. 4. It is noted that, in the example of Fig. 3, the interfaces I1∼I8 are arranged in sequence, and the interface circle 300 has a predefined axle SA, in which the interface circle 300 can be spun with respect to the predefined axle SA. In the example of Fig. 4, the interfaces I1∼I8 are arranged in sequence, and form the surfaces of the virtual 3D polyhedron 400 except for the surfaces which are perpendicular to a predefined axle SA of the virtual 3D polyhedron 400, in which the virtual 3D polyhedron 400 can be spun with respect to the predefined axle SA.

It is understood that, since the plurality of interfaces 121 are arranged in sequence, in some embodiments, an indicator IN showing a relative position of an interface currently displayed on the screen 110 among the plurality of interfaces 121 can be also displayed in the interface, as shown in Fig. 2. It is understood that, in some embodiments, when the interfaces are switched, the indicator IN will accordingly move to indicate the interface currently being viewed on the screen. In some embodiments, the indicator IN will move in the opposite direction of the object such as a finger movement on the screen.

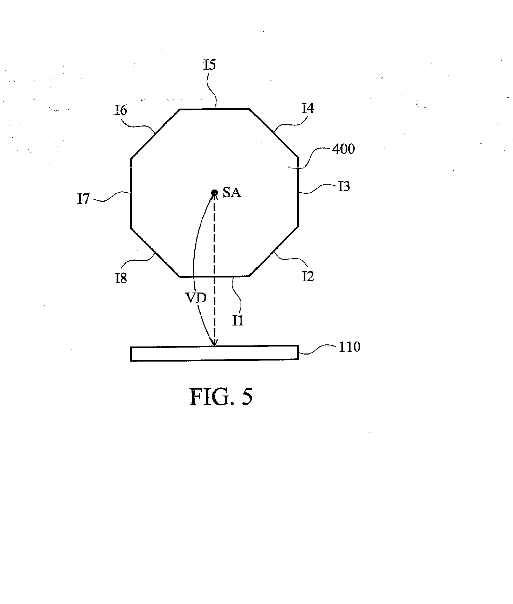

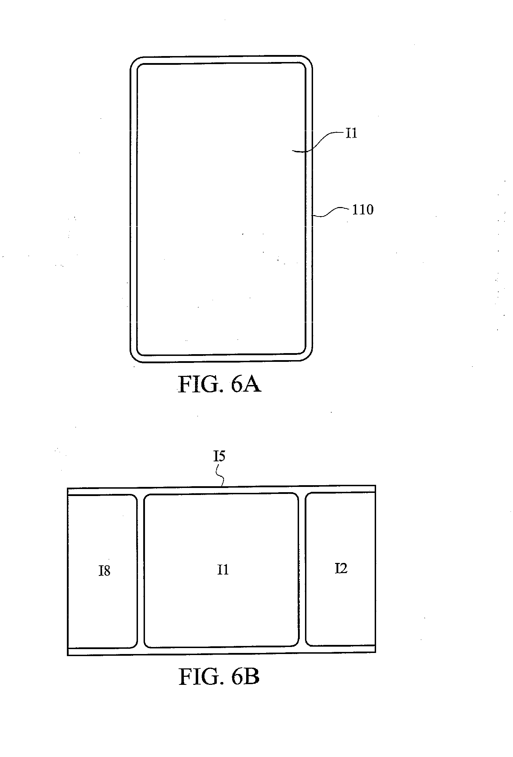

The processing unit 130 can perform the method for interface management of the present invention, which will be discussed further in the following paragraphs. It is noted that, the processing unit 130 can display the 3D object, such as the interface circle or the virtual 3D polyhedron on the screen 110. Note that, a concept of a virtual distance, used to determine where the 3D object should be located behind and away from the screen will be introduced. That is, the 3D object is located at the virtual distance behind the screen 110. For example, as shown in Fig. 5, the virtual 3D polyhedron 400 can be located at a virtual distance VD behind the screen 110. It is understood that, in some embodiments, the virtual distance VD is a distance from the screen 110 to the predefined axle SA. The virtual distance VD can dynamically adjust a size of the virtual 3D polyhedron 400 to be viewed on the screen 110. The virtual 3D polyhedron 400 will be viewed as being small when the virtual distance is being large, and the virtual 3D polyhedron 400 will be viewed as being large when the virtual distance is small. For example, when the browsing mode of the electronic device is a portrait mode, the virtual distance between the predefined axle of the 3D object, such as the interface circle or the virtual 3D polyhedron and the screen 110 can be set to a first value, and when the browsing mode of the electronic device is a landscape mode, the virtual distance between the predefined axle of the 3D object, such as the interface circle or the virtual 3D polyhedron and the screen 110 can be set to a second value, in which the second value is greater than the first value, such that only one interface is displayed on the screen 110 when the browsing mode of the electronic device is the portrait mode, as shown in Fig. 6A, and one completely displayed interface and two partially displayed interfaces which are adjacent to the completely displayed interface are displayed on the screen 110 when the browsing mode of the electronic device is the landscape mode, as shown in Fig. 6B. It is noted that, an interface which is completely displayed means the whole interface is displayed, and an interface which is partially displayed means only a part of the interface is displayed. As described, the 3D object, such as the interface circle or the virtual 3D polyhedron can be spun with respect to the predefined axle SA. During the spinning of the 3D object, the virtual distance between the predefined axle SA of the 3D object and the screen 110 will vary, which will be discussed further in the following paragraphs.

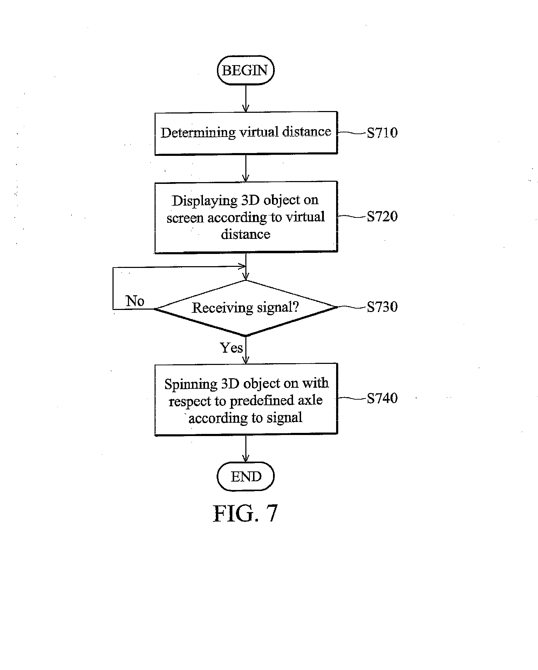

Fig. 7 is a flowchart of an embodiment of a method for interface management of the invention. The method for interface management can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto.

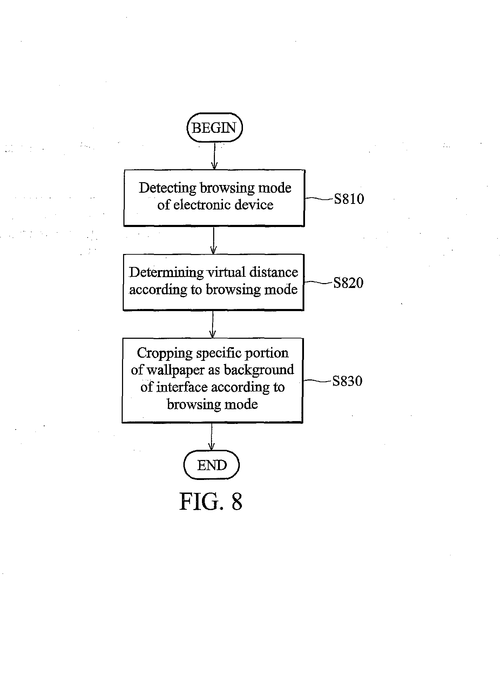

In step S710, a virtual distance between a predefined axle of a 3D object, such as an interface circle or a virtual 3D polyhedron and a screen of the electronic device is determined. It is understood that, in some embodiments, the 3D object may comprise a plurality of interfaces which are placed, in sequence, in a circle across a 3D space. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interface can comprise at least one widget, at least one application icon, and/or at least one button. It is understood that, the virtual distance can be predefined or determined according to various requirements or applications. In some embodiments, the virtual distance can be determined according to the browsing mode of the electronic device. Fig. 8 is a flowchart of an embodiment of a method for determining a virtual distance and a background of the invention. In step S810, the browsing mode of the electronic device is detected. In step S820, the virtual distance is determined according to the browsing mode of the electronic device. It is understood that, in some embodiments, when the browsing mode of the electronic device is a portrait mode, the virtual distance can be set to a first value, and when the browsing mode of the electronic device is a landscape mode, the virtual distance can be set to a second value, in which the second value is greater than the first value. It is noted that, the 3D object, such as the interface circle or the virtual 3D polyhedron will be viewed as being small when the virtual distance is large, and the 3D object, such as the interface circle or the virtual 3D polyhedron will be viewed as being large when the virtual distance is small. In some embodiments, only one interface is displayed on the screen when the browsing mode of the electronic device is the portrait mode, and one completely displayed interface and two partially displayed interfaces which are adjacent to the completely displayed interface are displayed on the screen when the browsing mode of the electronic device is the landscape mode. Similarly, an interface which is completely displayed means the whole interface is displayed, and an interface which is partially displayed means only a part of the interface is displayed. Then, in step S830, a specific portion is cropped from wallpaper according to the browsing mode of the electronic device. The specific portion of the wallpaper will be displayed as background of the interface. It is understood that, in some embodiments, when users switch between the interfaces, the background wallpaper will not slide. Meanwhile, the size of the wallpaper and the cropping, when it is set to the wallpaper, should change. In some embodiments, the wallpaper may have an equal height and length, such as 1024x1024. In the portrait mode, the center part of the wallpaper is cropped and used as background and the left/right part of the wallpaper is not used. In the landscape mode, the center part of the wallpaper is cropped and used as background and the upper/lower part of the wallpaper is not used. It is understood that, step S830 can be selectively performed according to various requirements and applications.

Referring to Fig. 7, in step S720, the 3D object, such as the interface circle or the virtual 3D polyhedron is displayed on the screen according to the determined virtual distance. For example, the 3D object is located at the determined virtual distance behind the screen. It is understood that, in some embodiments, a default interface will be displayed on the screen when the electronic device is activated, or a specific interface will be displayed on the screen when the electronic device is resumed from a specific state, in which the specific interface is the final interface of the specific state. It is understood that, in some embodiments, the browsing mode of the electronic device will be continuously detected, and the virtual distance will be dynamically adjusted when the browsing mode of the electronic device is changed. In step S730, it is determined whether a signal has been received. It is understood that, in some embodiments, the signal may be a gesture of an object on the screen. The gesture is used to trigger the electronic device to perform an interface switch operation. The gesture may comprise a distance, a contact time corresponding to the object on the screen, and a velocity determined based on the distance and the contact time. If no signal is received (No in step S730), the procedure remains at step S730. If a signal is received (Yes in step S730), in step S740, the 3D object, such as the interface circle or the virtual 3D polyhedron is spun with respect to the predefined axle, wherein the virtual distance varies gradually according to the signal during the spinning of the 3D object. It is understood that, in some embodiments, during the spinning of the 3D object, the 3D object can be stopped when a long contact on the screen is detected.

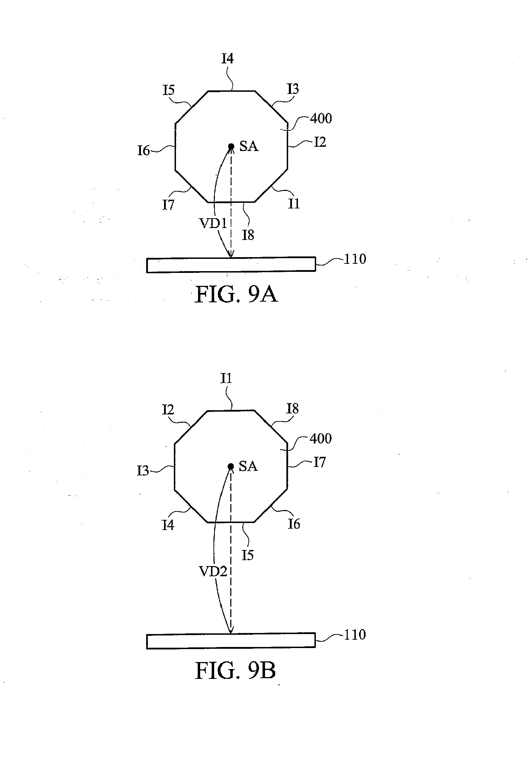

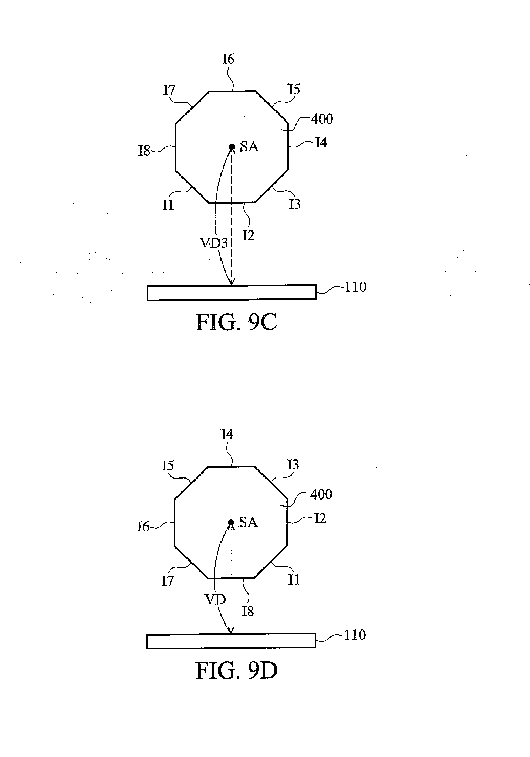

It is understood that, in some embodiments, during the spinning of the 3D object, the virtual distance varies gradually from a first predefined value, such as the first value in the portrait mode to a specific value, determined, based on the velocity, for example, of the signal, before finally returning back to the virtual distance of the first predefined value. That is, during the spinning of the 3D object, users can view that the 3D object is first far away from the screen, and then closer to the screen. Figs. 9A to 9D are schematic diagrams illustrating an embodiment of an example of spinning of the virtual 3D polyhedron of the invention. Initially, the virtual 3D polyhedron is located at a virtual distance VD behind the screen, as shown in Fig. 5. When a signal is received, the specific value of the virtual distance can be determined as a virtual distance VD2 based on the signal. First, the 3D object is located at a virtual distance VD1 (Fig. 9A) behind the screen, and located at a farthest virtual distance VD2 (Fig. 9B) behind the screen. Then, the 3D object is closed to the screen, wherein the 3D object is located at a virtual distance VD3 (Fig. 9C) behind the screen, and finally located at the initial virtual distance VD (Fig. 9D) behind the screen, wherein the virtual distance VD2 is greater than the virtual distance VD1 or the virtual distance VD3, and the virtual distance VD1 or the virtual distance VD3 is greater than the initial virtual distance VD. Further, it is understood that, in some embodiments, a spinning velocity of the spinning of the virtual 3D polyhedron can vary, and the spinning velocity of the spinning of the virtual 3D polyhedron can be from a first velocity, determined, based on the signal to 0. That is, during the spinning of the interface circle or the virtual 3D polyhedron, users can view that the spinning velocity of the interface circle or the virtual 3D polyhedron is gradually decreasing. As described, the farthest virtual distance (specific value) can be determined based on the velocity of the signal. It is understood that, in some embodiments, more circles will be spun when the velocity of the signal is high, and less circles will be spun when the velocity of the signal is slow. It is also understood that, in some embodiments, a specific interface can be located among the plurality of interfaces based on the signal, and the specific interface is displayed on the screen after the spinning of the virtual 3D polyhedron (when the virtual 3D polyhedron is stopped).

It is understood that, in some embodiments, a 3D graphic engine can be employed to dynamically generate at least one frame/picture corresponding to the transition for the spinning of the 3D object, such as the interface circle or the virtual 3D polyhedron by inputting related parameters, such as the various virtual distances of the interface circle or the virtual 3D polyhedron, the number of frames/pictures expected to be generated, the spinning velocity, and/or the located specific interface. In some embodiments, the frames/pictures corresponding to the transition for the spinning of the interface circle or the virtual 3D polyhedron can be generated in advance for various situations, and stored in a database. Once related parameters, such as the various virtual distances of the interface circle or the virtual 3D polyhedron, the number of frames/pictures expected to be generated, the spinning velocity, and/or the located specific interface are determined, related frames/pictures can be accordingly retrieved from the database for playback.

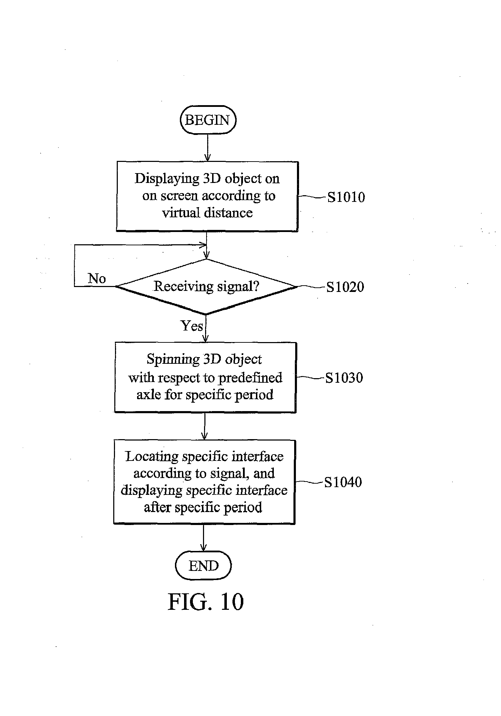

Fig. 10 is a flowchart of another embodiment of a method for interface management of the invention. The method for interface management can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto.

In step S1010, a 3D object, such as an interface circle or a virtual 3D polyhedron is displayed on the screen according to a virtual distance. Similarly, in some embodiments, the 3D object may comprise a plurality of interfaces which are placed, in sequence, in a circle across a 3D space. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interface can comprise at least one widget, at least one application icon, and/or at least one button. Similarly, in some embodiments, a default interface will be displayed on the screen when the electronic device is activated, or a specific interface will be displayed on the screen when the electronic device is resumed from a specific state, in which the specific interface is the final interface of the specific state. It is understood that, in some embodiments, the virtual distance can be used to determine where the 3D object should be located behind away from the screen. That is, the 3D object is located behind the screen, and a predefined axle of the 3D object is away from the screen with the virtual distance. The virtual distance can be predefined or determined according to various requirements or applications. In some embodiments, the virtual distance can be determined according to the browsing mode of the electronic device. Similarly, in some embodiments, the browsing mode of the electronic device will be continuously detected, and the virtual distance will be dynamically adjusted when the browsing mode of the electronic device is changed. In step S1020, it is determined whether a signal has been received. Similarly, in some embodiments, the signal may be a gesture of an object on the screen. The gesture is used to trigger the electronic device to perform an interface switch operation. The gesture may comprise a distance, a contact time corresponding to the object on the screen, and a velocity determined, based on the distance and the contact time. If no signal is received (No in step S1020), the procedure remains at step S1020. If a signal is received (Yes in step S1020), in step S1030, the 3D object, such as the interface circle or the virtual 3D polyhedron is spun with respect to the predefined axle for a specific period, wherein the virtual distance varies gradually according to the signal during the spinning of the 3D object.

It is understood that, in some embodiments, the specific period can be fixed. It is understood that, in some embodiments, the specific period can be determined, based on the signal. For example, when the velocity corresponding to the input signal is fast, the specific period is long, and when the velocity corresponding to the input signal is slow, the specific period is short. In some embodiments, during the spinning of the 3D object, the virtual distance varies gradually from a first predefined value, such as the first value in the portrait mode to a specific value, determined, based on the velocity, for example, of the signal, before finally returning back to the virtual distance of the first predefined value. That is, during the spinning of the 3D object, users can view that the 3D object is first far away from the screen, and then closer to the screen. Further, in some embodiments, a spinning velocity of the spinning of the 3D object can vary, and the spinning velocity of the spinning of the 3D object can be from a first velocity, determined, based on the signal to 0. That is, during the spinning of the 3D object, users can view that the spinning velocity of the 3D object is gradually decreasing. It is understood that, in some embodiments, more circles will be spun when the velocity of the signal is high, and less circles will be spun when the velocity of the signal is slow. It is understood that, a specific interface can be located among the plurality of interfaces based on the signal. After the specific period is ended (the spinning of the 3D object), in step S1040, the specific interface is displayed on the screen. Similarly, in some embodiments, during the spinning of the 3D object, the 3D object can be stopped when a long contact on the screen is detected.

Similarly, in some embodiments, a 3D graphic engine can be employed to dynamically generate at least one frame/picture corresponding to the transition for the spinning of the 3D object, such as the interface circle or the virtual 3D polyhedron by inputting related parameters, such as the various virtual distances of the 3D object, the number of frames/pictures expected to be generated, the spinning velocity, the specific period, and/or the located specific interface. In some embodiments, the frames/pictures corresponding to the transition for the spinning of the3D object can be generated in advance for various situations, and stored in a database. Once related parameters, such as the various virtual distances of the 3D object, the number of frames/pictures expected to be generated, the spinning velocity, the specific period, and/or the located specific interface are determined, related frames/pictures can be accordingly retrieved from the database for playback.

Therefore, the methods and systems for interface management can display interfaces of an electronic device with 3D visual effects, thus, enhancing the value of devices and increasing user experience.

Methods for interface management, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for interface management, for use in an electronic device, comprising:
providing a plurality of interfaces (121) arranged in sequence, wherein the interfaces are placed in a circle (300) across a 3D space to form a 3D object, and the interfaces comprise pages or menus;
receiving a signal; and
in response to the signal, adjusting the position of the 3D object viewed on a screen of the electronic device, wherein the 3D object is located at a virtual distance behind and away from the screen, and the virtual distance varies gradually.

2. The method of claim 1, wherein the 3D object has a predefined axle, and the method further comprises a step of spinning the 3D object with respect to the predefined axle.

3. The method of claim 2, further comprising:
spinning the 3D object with respect to the predefined axle for a specific period; and
after the specific period, stopping the spinning of the 3D object.

4. The method of claim 2, wherein the signal comprises a movement on the screen, and the 3D object is spun in more circles when the velocity of the movement is high, and the 3D object is spun in less circles when the velocity of the movement is slow.

5. The method of claim 2, further comprising:
before the spinning of the 3D object, displaying a first interface among the plurality of interfaces on the screen;
locating a second interface among the plurality of interfaces based on the signal; and
displaying the second interface after the spinning of the 3D object is stopped.

6. The method of claim 2, wherein a spinning velocity of the spinning of the 3D object is varied, and the spinning velocity of the spinning of the 3D object is from a first velocity, determined, based on the signal to 0.

7. The method of claim 2, wherein the virtual distance is a first value, and during the spinning of the 3D object, the virtual distance varies gradually from the first value to a second value, determined, based on the signal, before finally returning back to the virtual distance of the first value.

8. The method of claim 1, further comprising:
detecting a browsing mode of the electronic device; and
accordingly adjusting the virtual distance.

9. The method of claim 8, wherein when the browsing mode is a portrait mode, the virtual distance is set to a first value, and when the browsing mode is a landscape mode, the virtual distance is set to a second value, in which the second value is greater than the first value.

10. The method of claim 9, further comprising displaying a first interface on the screen when the browsing mode of the electronic device is the portrait mode, and displaying the first interface and displaying partials of two adjacent interfaces of the first interface on the screen when the browsing mode of the electronic device is the landscape mode.

11. The method of one or more of the claims 1 to 10, wherein the signal comprises a gesture of an object on the screen, and the gesture comprises a distance, a velocity, or a contact time corresponding to the object on the screen.

12. A system for interface management (100) for use in an electronic device, comprising:
a storage unit (120) comprising a plurality of interfaces (121) arranged in sequence, wherein the interfaces are placed in a circle (300) across a 3D space to form a 3D object, and the interfaces comprise pages or menus;
a screen (110); and
a processing unit (130) receiving a signal, in response to the signal, adjusting
the position of the 3D object viewed on the screen, wherein the 3D object is located at a virtual distance behind and away from the screen, and the virtual distance are gradually varied.

13. The system of claim 12, wherein the 3D object has a predefined axle, and the processing unit further spins the 3D object with respect to the predefined axle.

14. The system of claim 13, wherein the signal comprises a movement on the screen, and the 3D object is spun in more circles when the velocity of the movement is high, and the 3D object is spun in less circles when the velocity of the movement is slow.

15. The system of claim 13, wherein the processing unit further spins the 3D object with respect to the predefined axle for a specific period, and after the specific period, stops the spinning of the 3D object.

16. The system of claim 13, wherein before the spinning of the 3D object, the processing unit further displays a first interface among the plurality of interfaces on the screen, locates a second interface among the plurality of interfaces based on the signal, and displays the second interface on the screen after the spinning of the 3D object is stopped.

17. The system of claim 13, wherein a spinning velocity of the spinning of the 3D object is varied, and the spinning velocity of the spinning of the 3D object is from a first velocity, determined, based on the signal to 0.

18. The system of claim 13, wherein the virtual distance is a first value, and during the spinning of the 3D object, the virtual distance varies gradually from the first value to a second value, determined, based on the signal, before finally returning back to the virtual distance of the first value.

19. The system of according one or more of the claims 12 to 18, wherein the processing unit further detects a browsing mode of the electronic device, and accordingly adjusting the virtual distance.

20. The system of claim 19, wherein when the browsing mode is a portrait mode, the processing unit sets the virtual distance as a first value, and when the browsing mode is a landscape mode, the processing unit sets the virtual distance as a second value, in which the second value is greater than the first value.

21. The system of claim 20, wherein the processing unit further displays a first interface on the screen when the browsing mode of the electronic device is the portrait mode, and displays the first interface and displays partials of two adjacent interfaces of the first interface on the screen when the browsing mode of the electronic device is the landscape mode.

22. A machine-readable storage medium comprising a computer program, which, when executed, causes a device to perform a method for interface management, wherein the method comprises:
providing a plurality of interfaces (121) arranged in sequence, wherein the
interfaces are placed in a circle (300) across a 3D space to form a 3D object, and the interfaces comprise pages or menus;
receiving a signal; and
in response to the signal, adjusting the position of the 3D object viewed on a
screen of the electronic device, wherein the 3D object is located at a virtual distance behind and away from the screen, and the virtual distance are gradually varied.
